# EUROPEAN PATENT SPECIFICATION

(11) **EP 1 978 672 B1**
(45) Date of publication and mention of the grant of the patent: **01.09.2010**
(21) Application number: 07252641.1
(22) Date of filing: 29.06.2007
(51) Int. Cl.: H04L 12/24, G06F 9/445

(54) **Method for implementing management software, hardware with pre-configured software and implementing method thereof**
Verfahren zur Implementierung einer Managementsoftware, Hardware mit vorkonfigurierter Software und Implementierungsverfahren dafür
Procédé pour mettre en place le logiciel de gestion, matériel avec logiciel préconfiguré et procédé de mise en place correspondant

(30) Priority: 02.04.2007 US 909711 P; 11.05.2007 US 747229
(43) Date of publication of application: 08.10.2008
(73) Proprietor: Inventec Corporation, Shih-Lin District Taipei City (TW)
(72) Inventor: Yeung, Alan S, Burlingame, CA 94010 (US); Cha, Deming, Palo Alto, CA 94303 (US); Pang, Nicholas Y., San Mateo, CA 94403 (US)
(74) Representative: Chamberlain, Alan James

(56) References cited:
- EP-A- 1 715 620
- WO-A-03/023993
- US-A1- 2005 102 664
- US-B2- 6 728 766

## Description

### BACKGROUND OF THE INVENTION

### 1. Field of the Invention

The present invention generally relates to a method for installing software, and in particular, to a method for implementing Enterprise software.

### 2. Description of Related Art

Along with the advance in information technology and the diversity of enterprise business, enterprises have developed various information systems meeting the demands for managing information in each of the departments. These information systems collect and record a large sum of data from the departments. However, the departments usually have their own requirements for the information systems, which result in that each of the information systems may only work for individual department independently and the data among different information systems cannot be exchanged.

As the enterprises move forward to globalization, the communications between different branches or departments have become an inevitable issue, and how to exchange data among different information systems is more crucial. The enterprises need to contribute more efforts and costs for maintaining these information systems and ensuring the correctness and consistency of the data therein.

Under the aforesaid situation of strong demands on data integration, a solution called Enterprise Resource Planning (ERP) system that can fit the need of managing information and enhance the competitiveness of the enterprise was derived. The ERP system is application software used for integrating and combining the data of the departments, such as financial, accounting, production, material management, quality assurance, marketing, and human resource departments, in a company. When the development of the ERP system tends to be mature, the company may connect all of their branches with the global financial/production/marketing system, so as to instantly analyze the quality and specifications of the products, and obtain useful information such as profits and client satisfaction.

In addition to the ERP system that provides the integration of enterprise resources and the synchronization of data, software vendors also design a series of business-oriented software according to various enterprise flows and demands. The software collaborates with the ERP system and makes use of the database of the ERP system so as to improve the effectiveness of the operation. The software is the so called Enterprise software.

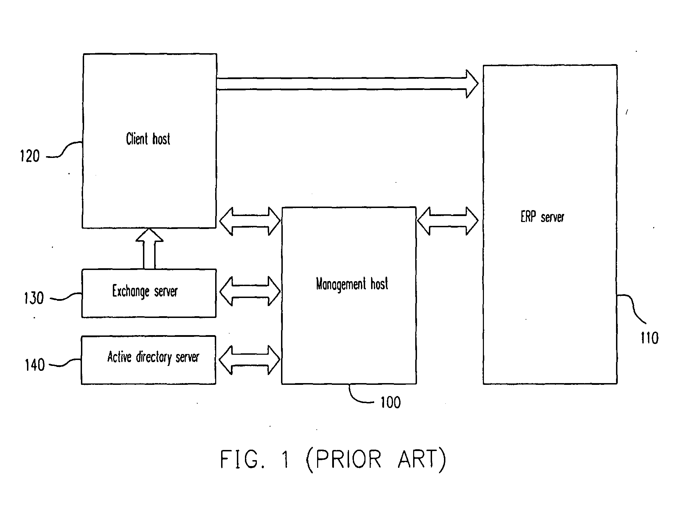

FIG. 1 is a schematic diagram illustrating a conventional method for implementing the Enterprise software. Referring to FIG. 1, a computer is selected as a management host 100 and connected with the intranet of the company to link to a plurality of servers existing in the company, such as an ERP server 110, an exchange server 130, and an active directory service server 140. When the configurations and parameters of the Enterprise software and the application software installed in the aforesaid servers are set, the implementation of the Enterprise software is completed. At this time, the employees of the company may use a client host 120 to link to the management host 100 and execute management functions provided by the Enterprise software.

However, the ERP system is bulky and complicated. When implementing the Enterprise software with the ERP system, a large sum of parameters, sophisticated processes, and repeated tests need to be carried out, such that the Enterprise software can comply with the ERP system precisely and operate normally. Accordingly, the implementation of the Enterprise software always requires support from professional experts. Through cooperation of experienced consultants from software vendors with the staffs from the management information system (MIS) department of the company for a few weeks or months, the desired software and parameters required by the Enterprise software are able to be fully implemented. As a result, the company has to spend considerable money and manpower on accomplishing the implementation. Moreover, when there is a need to maintain or update the Enterprise software, same troublesome implementing procedures have to be undergone, which is not only time consuming but laborious.

EP 1715620 describes a method and system for remote server administration. US 6,728,766 describes methods, systems and computer program products for license use management on a network. WO 03/023993 describes mobile apparatus for configuring portable devices to be used on-board mobile platforms. US 2005/0102664 describes the installation of software in a system.

### SUMMARY OF THE INVENTION

Accordingly, the present invention is directed to a method for implementing management software, wherein a management host pre-installed with pre-configured management software at a service end is provided for a client end to implement the management software, such that the miscellaneous installation steps can be simplified and the time and cost for the implementation can be reduced.

The present invention provides a method for implementing management software at a client end, wherein the management software is used for collecting, managing, and analyzing data of a plurality of peripheral hosts. In the present method, a management system fitting the requirements of the management software is established at a service end first. The management system includes a management host and a plurality of first peripheral hosts, and the management host is connected to each of the first peripheral hosts through a network. Then, the management software is installed in the management host. The installation includes setting first software configuration data for configuring the management software with a plurality of application programs installed in the first peripheral hosts. The management host pre-installed with the pre-configured management software is delivered to the client end and connected with each of a plurality of second peripheral hosts at the client end through the network. The software licensing data, second software configuration data, and network configuration data of the second peripheral hosts at the client end are obtained and set in the management host. Finally, the management host is rebooted to complete the implementation of the management software.

According to an embodiment of the present invention, in the step of establishing the management system fitting the requirements of the management software, the hardware equipments fitting the requirements of the management software in the management host and the first peripheral hosts are configured and the operating systems and application programs fitting the requirements of the management software in the management host and the peripheral hosts are installed.

According to an embodiment of the present invention, in the step of installing the management software in the management host, a software configuration database is further established in the management host for recording the first software configuration data. In addition, the software licensing data, second software configuration data and network configuration data obtained at the client end are also recorded in this software configuration database.

According to an embodiment of the present invention, after installing the management software in the management host, an image file of the management software is further produced and the image file is restored to a plurality of management hosts, which are delivered to a plurality of client ends for implementing the management software.

According to an embodiment of the present invention, the management software is selected according to a plurality of client requirements, the management system fitting the requirements of the management software is established, and the management software is installed in the management host. The image file of the management software corresponding to each of the client requirements is then produced respectively. Therefore, the image file of the management software can be picked up to be restored to the management host according to the client requirement requested by the client end and the management host pre-installed with the pre-configured management software is delivered to the client end for implementing the management software.

According to an embodiment of the present invention, in the step of obtaining the software licensing data, second software configuration data, and network configuration data of the peripheral hosts at the client end, and setting those data in the management host, the second software configuration data for configuring the management software with the application programs of the peripheral hosts is also set. The second software configuration data comprises request handlers, active directories, Kerberos securities, database entries, and policy settings.

According to an embodiment of the present invention, the software licensing data comprises licensing agreements of the application programs installed in the peripheral hosts at the client end. The network configuration data comprises host names, domain names, Internet Protocol (IP) Addresses, port numbers, user IDs and passwords of the peripheral hosts at the client end.

According to an embodiment of the present invention, the peripheral hosts comprise an Exchange Server, a Structured Query Language (SQL) Server, an Active Directory Service Server, and a Backend Server. The management software comprises Enterprise software.

The present invention provides a method for implementing hardware with pre-configured management software. The present method includes two steps, one of which is a software and hardware pre-configuring step while the other one is a user configuring step. In the software and hardware pre-configuring step, a management system including a management host and a plurality of first peripheral hosts is established, wherein the management host is connected to each of the first peripheral hosts through a network. Then, management software is installed in the management host. The management software is configured with a plurality of application programs installed in the first peripheral hosts and first software configuration data is set accordingly. Finally, the connections between the management host and the first peripheral hosts are removed. On the other hand, in the user configuring step, the management host pre-installed with the pre-configured management software is connected to each of a plurality of second peripheral hosts through a network. Then, software licensing data, second software configuration data, and network configuration data of the second peripheral hosts are obtained, and set in the management host.

The present invention provides hardware with pre-configured management software, which is used for connecting with a plurality of first peripheral hosts at a client end through a network and obtaining software licensing data, first software configuration data, and network configuration data of the first peripheral hosts so as to implement management software at the client. The hardware comprises a storage device, a connecting device, and a database. The storage device is used for storing the management software. The connecting device is used for connecting the hardware with a plurality of second peripheral hosts at a service end, and database is used for storing first software configuration data that configures the management software installed in the hardware with a plurality of application programs installed in the second peripheral hosts

In the present invention, the management software is sold along with a management host (or so-called appliance). The configurations between the management software and the application programs that the management software will need to deal with at the client end are preset and pre-tested. Users only need to do the simple settings such as network configuration, software configuration, and software license inputs to accomplish the implementation of the management software. With the innovated method as described above, users can do the system implementation work that used to be miscellaneous and time consuming by themselves instead of relying on the experts, and software vendors can provide a customized appliance for the users by just selecting and restoring an image file to the appliance. Both the users and the software vendors are benefited.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a block diagram illustrating a conventional enterprise system.

FIG. 2 is a schematic diagram illustrating a method for implementing management software according to an embodiment of the present invention.

FIG. 3 is a flowchart illustrating the method for implementing management software according to an embodiment of the present invention.

FIG. 4 is a flowchart illustrating the method for implementing management software according to another embodiment of the present invention.

FIG. 5 is a flowchart illustrating a method for implementing hardware with pre-configured management software according to another embodiment of the present invention.

FIG. 6 is a block diagram illustrating hardware with pre-configured management software according to another embodiment of the present invention.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

As an Enterprise software is implemented into an enterprise, professional experts are required to make use of the equipments (ex. an enterprise resource planning (ERP) system and an exchange server) existing in the enterprise's server to install the Enterprise software in a management host and to configure the management host with peripheral hosts such as the ERP system and the exchange server. Due to the complexity of the ERP system, the stable Enterprise software fitting the requirements of the client may merely be established after dealing with hundreds of dialog windows, inputting a great number of parameters, and repetitively installing, testing, modifying and re-testing the Enterprise software.

However, it can be deduced from analyzing the above steps of implementation of the Enterprise software that the software and hardware associated with the Enterprise software are actually the same even though the internal system of each enterprise may vary, revealing that certain rules may be followed during the implementation of said software and hardware, and that said implementation can be "completed in advance". Accordingly, if a general standardized software and hardware environment can be established first and all the issues possibly encountered during the installation and configuration may be resolved by anticipation, the installation procedures at the client end may then be simplified, and the required time and efforts spent on the implementation can be reduced. Based on the foregoing concept, the present invention is directed to a method for implementing management software and a method for implementing hardware with pre-configured software. In order to make the present invention more comprehensible, several embodiments are described below as the examples to prove that the invention can actually be realized.

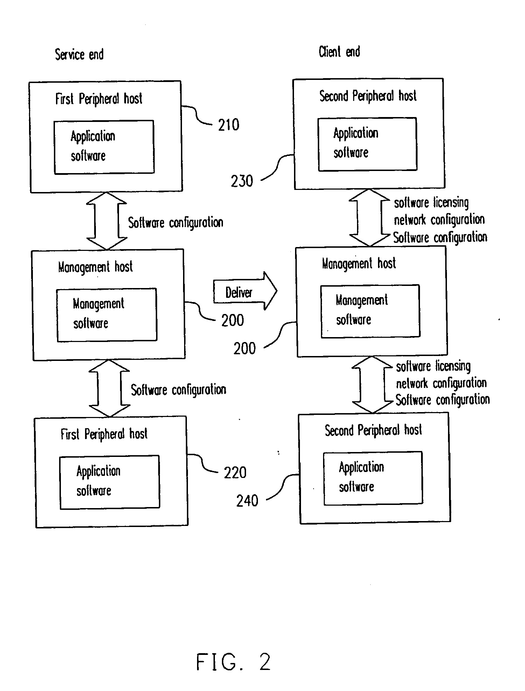

FIG. 2 is a schematic diagram illustrating a method for management software according to an embodiment of the present invention. Referring to FIG. 2, the method of the present invention is implemented at both a service end and a client end. At the service end, the management host 200 is connected to first peripheral hosts 210 and 220 and installed with the management software. The software configuration between the management software and the application software installed in first peripheral hosts 210 and 220 are then preset. Afterwards, the management host 200 installed with the pre-configured software is delivered to the client end and connected with second peripheral hosts 230 and 240. The remaining tasks are just simply to obtain software licensing data of the application software installed in the second peripheral hosts 230 and 240, to set software configuration data of the second peripheral hosts 230 and 240, and to set network configuration data of the second peripheral hosts 230 and 240, and then the implementation is completed. For more information about the implementing method, a detailed flowchart and corresponding descriptions are disclosed below.

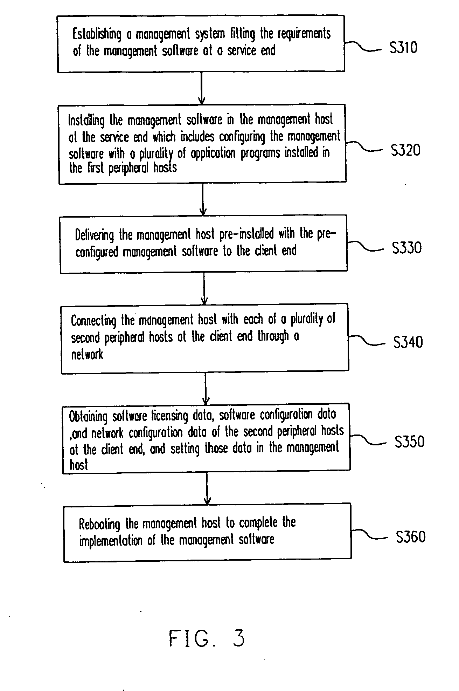

FIG. 3 is a flowchart illustrating a method for implementing management software according to an embodiment of the present invention. Referring to FIG. 3, the present embodiment is adapted to the implementation of the management software at a client end. The management software includes Enterprise software suitable for collecting, managing, and analyzing data of a plurality of peripheral hosts. In the present embodiment, complicated installation and configuration procedures are shifted to a service end. Specifically, a group of experienced experts creates a general solution integrating software and hardware and provides a complete set of software and hardware equipments, or the so-called appliance, to the client. During the installation at the client end, the set of the software and hardware equipments is connected to the existing system. The client merely needs to connect the equipments with the original system and enables some simple settings, and thereby the management software is then ready for use within a short period.

The present embodiment can be divided into two stages: the first stage is to establish a host pre-installed with pre-configured software, and the second stage is to deliver the host to the client end and accomplish subsequent settings of environment. The detailed steps of the two stages are respectively described as follows.

In the first stage, a software vendor at the service end establishes a management system fitting the requirements of the management software according to the fundamental demands for the system environment requested by the management software (step S310). The management system includes a management host and a plurality of peripheral hosts, and these hosts may be connected with each other through a network, for example. The establishment in the step S310 can be further classified into a software establishment part and a hardware establishment part. The hardware establishment part includes selecting the necessary peripheral hosts to be established. The peripheral hosts include servers such as an ERP system server, an exchange server, a structured query language (SQL) server, an active directory service server, a backend server, and so forth. Moreover, the step S310 further includes configuring hardware equipments such as processors, memories and hard disks in the management host and the peripheral hosts. The hardware equipments meet the requirements of the management software. On the other hand, basic operating systems are also required to be installed in the management host and the peripheral hosts. Additionally, application programs or patches are installed as well to satisfy the requirements of the management software.

As the management system environment is built up, the management software is then installed in the management host (step S320). According to the present embodiment, parameter data to be configured for connecting the management host to each of the peripheral hosts and accomplishing communications therebetween can be divided to two categories based on the information provided by the software vendor and the practical experiences offered by the professional experts by whom the management software is actually installed at the client end. The first category is general parameters indicating that same parameters are used no matter where the management host is configured or what peripheral equipments are required to be connected to the management host. For example, a location of a database can be categorized into one of the general parameters. On the contrary, the second category refers to customer site specific parameters orienting towards the environment at the client end. In more details, different parameters are set upon the different software and hardware equipments employed by the different clients. For example, internet protocol (IP) address can be categorized into one of the customer site specific parameters.

In view of the foregoing, as the management software is actually operated at the client end, the management software should fulfill the requirements of communicating with the application programs in a plurality of the peripheral hosts during the installation. Here, the group of the professional experts at the service end is required to select the preset general parameters upon the functions of the management software and proceed to the configuration based on the corresponding dialog windows. For example, a user's account and a password are required and set up provided that the application programs are to be operated. The IP address and a port number are required given that the network connection is to be activated. Connection parameters such as a name of a database and an address thereof are needed providing that the database is to be used. After the software configuration data is all set up, the function of the management software can then be effectively optimized.

After the software and hardware equipments are completely installed and configured, the management hosts pre-installed with the pre-configured management software may be delivered to the client end (step S330) for subsequent installation procedures, initiating the second stage provided in the present embodiment.

In the second stage, the management host is delivered to the client end. The client may then connect the management host to the system network, such that the connection between the management host and the peripheral hosts originally configured at the client end is established, and data transmission is allowed (step S340).

Here, in order for the management host to identify the peripheral hosts connected therewith and to install the application programs in the peripheral hosts, it is necessary to obtain software licensing data, software configuration data, and network configuration data of the peripheral hosts for setting the management software (step S350). Through a simple user interface, the user is required to input the network configuration data including a domain name representing the domain connected by the management host, a host name of each of the peripheral hosts in the domain, the IP address, the port number, the user's account, the password, and so on. Further, to make sure the software installed in the peripheral hosts is legitimate and satisfies the requirements of the management software, it is also necessary to input the software licensing data such as serial numbers, the user's account and the password of the desired application programs. Finally, for authorized communications between various hosts, software configuration data like Exchange service users, Kerberos security users, request handlers, active directories, database entries, and policy settings are entered as inputs.

After the parameters required by all the management software are all set, the user is then able to reboot the management host, such that the configured parameters take effect. Up to here, the implementation of the management software is finished. (step S360).

Through said implementation of the management software, the complicated implementation procedures can be simplified to the same degree as the general installation of the software and network. The user completes the implementation procedures by merely inputting the software licensing data of each of the application programs, the software configuration data, and the network configuration data of each of the peripheral hosts. In comparison with the time-consuming system implementation cycle according to the related art, the method proposed by the present invention only takes several days or hours to complete all of the implementation procedures, leading to outstanding performance and stability.

It should be noted that the management software is individually installed and configured based on a plurality of the client's requirements by adopting said method for implementing the easy-to-install management software in the present invention. Moreover, the management software is stored and archived as an image file for reducing production costs arisen from the services rendered by the service vendor. Another embodiment is provided hereinafter for further elaboration.

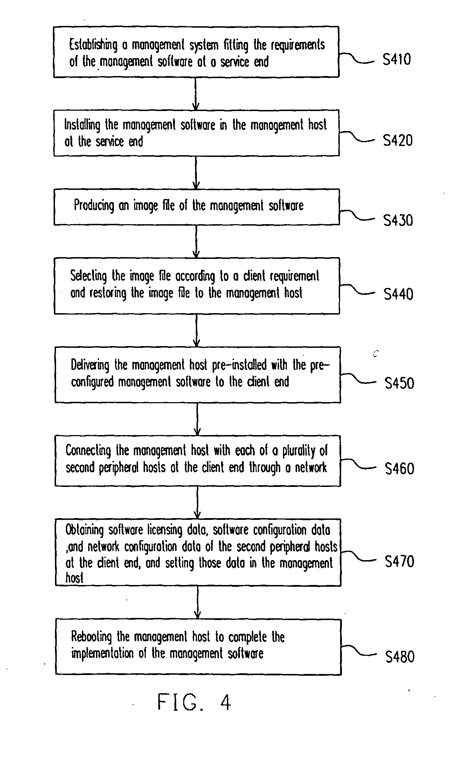

FIG. 4 is a flowchart illustrating a method for implementing management software according to another embodiment of the present invention. Referring to FIG. 4, the management software undergoes similar implementation procedures in the present embodiment. The difference lies in that the pre-configured management software with different specifications is pre-installed in a management host based on client's demands, and the management software is burned to an image file. Thereby, appropriate appliances may be promptly provided in accordance with the client's requirements for system implementation.

First, the management software meeting the requirements of the management software is selected and established based on the client's demands (step S410). As described in the previous embodiment, the management system includes one management host and a plurality of peripheral hosts. However, the difference lies in that the client's demands are taken into consideration in the present embodiment. Therefore, the management system established in the present embodiment and the subsequently-installed management software are dissimilar to those disclosed in the previous embodiment. For example, an ERP system and an exchange server may be required by the management software. However, clients possessing different equipments need different management software. Suppose that a client end is not equipped with the ERP system, or that neither the ERP system nor the exchange server is available, a different management system is then required for satisfying the requirements of the client when the management software is successively installed.

After the management system environment is built up, the management software is then installed in the management host (step S420). As delineated in the previous embodiment, the management software should be capable of communicating with application programs in a plurality of the peripheral hosts in the step S420. Aside from the above, different management systems, the software to be installed and parameters to be set should be taken into account based on the different client's demands. Here, the number of the management host for installing the management software is not limited to one. For example, when the exchange server is not contained at the client end, the exchange server may be installed by the service end on another management host, or the management software and an exchange server software may be installed in the same management host, such that the management host pre-installed with the management software can be integrated into the client's system architecture and operated normally right after the management host is delivered to the client end.

After software and hardware equipments are completely installed and configured, the present embodiment further includes the step of burning the management software installed in the management host to an image file (step S430). Here, the step further includes burning the management software having the correspondingly installed software and configured parameters to different image files based on the different client's demands.

After said preparation is completed, orders from the clients can be handled at this current stage. Based on the client's demands, the corresponding image file is selected and burned to the management host (step S440). Thereafter, the management host having the burned image file can be directly delivered to the client end (step S450). Here, the pre-installed and pre-configured management software can be archived in the image form, and can be recovered on a plurality of the management hosts if deemed necessary, such that the products with same specifications can be manufactured on large scale. Thereby, the diversity of the products can be improved, and the production costs can be reduced to a great extent.

As demonstrated in the previous embodiment, after the management host is delivered to the client end, the client then connects the management host to the system network, such that the connection between the management host and the peripheral hosts originally configured at the client end is established, and data transmission is allowed (step S460). Next, software licensing data, software configuration data, and network configuration data are obtained by the management host, and the management software is configured based on said data (step S470). After the parameters required by all the management software are all set, the user is able to reboot the management host, such that the configured parameters take effect. Up to here, the implementation of the management software is finished. (step S480).

It should be noted that the management host pre-installed with the management software is directly provided to the consumers in the present invention, while the management software is conventionally installed at the client end. Accordingly, the time and costs of the installation is reduced. Moreover, when maintenance or an upgrade is necessary in the future, the management software can be updated by directly replacing the old management host with a new management host. No aid of the professional expects is needed, for only a replacement of the management host and some simple environment settings are involved in the above procedures. Thus, the costs arisen from the installation of the management software made by the professional expects can be saved, and the products manufactured by performing said method are more competitive.

The concept of the implementing method as described above can be applied to a single hardware. As the complicated installation and configuration procedures are done by an experienced expert, for example, an administrator, in a first step, the procedures expected in a second step can be simplified and carried out by general users. An embodiment is provided herein based on the aforesaid content.

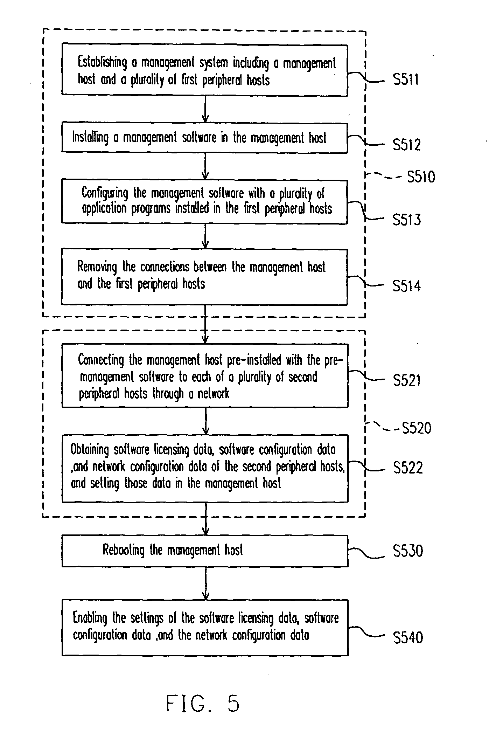

FIG. 5 is a flowchart illustrating a method for implementing hardware with pre-configured software according to another embodiment of the present invention. Referring to FIG. 5, the method of the present invention is divided into two steps including a software and hardware pre-configuring step (step 510) and a user configuring step (step 520).

In the software and hardware pre-configuring step (step 510), a management system including a hardware and a plurality of first peripheral hosts is established first (step 511) and the hardware therein is connected to each of the first peripheral hosts through a network. In more details, the components in the hardware and the equipments in the first peripheral hosts are configured and the operating systems and application programs are also installed in the hardware and the first peripheral hosts.

Next, management software is installed in the hardware (step 512) and configured with a plurality of the application programs installed in the first peripheral hosts, during which software configuration data is set accordingly (step 513). When all of the settings and configurations are completed, the connections between the hardware and the first peripheral hosts are removed (step 514). Here, all of the most complicated settings are done, and the hardware pre-installed with the pre-configured management software can be given to a general user for accomplishing the rest of the implementing procedures.

Now the method proceeds to the user configuring step (step 520). In this step, the hardware pre-installed with the pre-configured management software is connected to each of a plurality of the second peripheral hosts through a network by the user (step 521). Then, software licensing data, software configuration data, and network configuration data of the second peripheral hosts are obtained from the input by the user, and those data are set in the hardware accordingly (step 522). As described above, in this step, the user only needs to conduct simple procedures such as network cable connection and data input, and the whole implementation is done, such that the time spent on the implementation of the hardware can be reduced down to several hours.

Finally, the user can reboot the hardware (step 530), such that the settings of the software licensing data, the software configuration data, and the network configuration data as previously input can be enabled (step 540). Up to here, the implementation of the hardware is finished.

It should be noted that the hardware as described in the foregoing embodiment is pre-installed with the management software, and the management software is pre-configured with the application programs installed in the peripheral hosts. That means the hardware can be installed in any place by any user because all of the most complicated and time consuming "tasks" are already carried out, such that the hardware is "pre-configured" for customer installation immediately. Here, an embodiment indicating all the components needed to be disposed in the hardware is further provided.

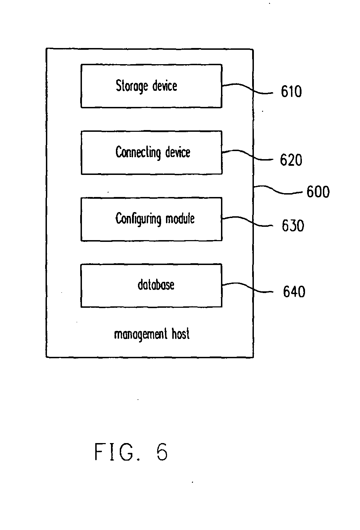

FIG. 6 is a block diagram illustrating hardware with pre-configured management software according to another embodiment of the present invention. Referring to FIG. 6, the hardware 600 in the present embodiment can be used for connecting a plurality of first peripheral hosts (not shown) through a network and obtaining software licensing data and network configuration data of the first peripheral hosts. The hardware 600 can be a management host for collecting, managing, and analyzing data of the first peripheral hosts, but not limited by the present embodiment.

The hardware 600 may be manufactured in a factory and includes a storage device 610, a connecting device 620, a configuring module 630, and a database 640. The hardware 600 is installed with the management software at a service end where the installed management software is stored in the storage device 610 which can be a hard disk or any other storage medium. The hardware 600 is connected with a plurality of second peripheral hosts (not shown) at the service end through the connecting device 620 which is a network card inserted in the baseboard of the hardware 600, for example. The management software is needed for performing the application programs installed in the second peripheral hosts and executing management functions. Therefore, the configuring module 630 is added and used for configuring the management software with the application programs. After the management software installed in the hardware 600 is configured by the configuring module 630, the corresponding software configuration is then stored in the database 640 and the configuring module 630 may be removed from the hardware 600 before delivering the hardware 600 to the users. Afterwards, through referencing the software configuration stored in the database 640, users are able to implement the management software to their exiting systems in a short period, such that the time and costs for implementation can be saved.

Based on the foregoing content, an innovated business method for implementing the Enterprise software is introduced and several embodiments are addressed, however, the scope of the present invention is not limited to them. For those skilled in art, the concept of present invention can also apply to various fields, such as Enterprise Search, Mobile, Security, and Business Intelligence. The software vendors may install and configure software required by a Search Server, a Mobile Server, an Intrusion Detection System, or a Business Warehouse in an appliance and sell the appliance in a package. With all the installations and configurations are previously completed, the implementation of the software is greatly simplified and convenience for the use of the software is enhanced. In the end, such an easy-to-run feature makes the product of the software vendors become more competitive.

In summary, the method for implementing the management software of the present invention has at least the following advantages:

1. Since the complicated installation and configuration procedures are shifted to the service end, the installation procedures at the client end can be simplified, which reduces the time and the efforts spent on the installation of the management software at the client end.

2. As the management software is pre-installed in the management host, and the user is supplied with the complete set of the software and hardware equipments, the product quality is apt to be monitored by the service end, achieving the purpose of diversity and flexibility.

3. When maintenance or the upgrade is necessary, the management software can be updated by directly replace the management host without drawing support from the professional expects, saving maintenance costs of the management software.

Although the present invention has been disclosed above by the embodiments, they are not intended to limit the present invention. Anybody skilled in the art can make some modifications and alteration without departing from the spirit and scope of the present invention. Therefore, the protecting range of the present invention falls in the appended claims.

It will be apparent to those skilled in the art that various modifications and variations can be made to the structure of the present invention without departing from the scope of the invention. In view of the foregoing, it is intended that the present invention cover modifications and variations of this invention provided they fall within the scope of the following claims and their equivalents.

## Claims

1. A method for implementing management software at a client end, wherein the management software is used for collecting, managing, and analyzing data of a plurality of peripheral hosts, the method comprising:
establishing a management system at a service end, wherein the management system includes a management host and a plurality of first peripheral hosts, and the management host is connected to each of the first peripheral hosts through a network (S310; S410);
installing the management software in the management host at the service end which includes setting first software configuration data used for configuring the management software with a plurality of application programs installed in the first peripheral hosts (S320; S420);
delivering the management host pre-installed with the pre-configured management software to the client end (S330; S450);
connecting the management host with each of a plurality of second peripheral hosts at the client end through a network (S340; S460);
obtaining software licensing data, second software configuration data, and network configuration data of the second peripheral hosts at the client end, and setting those data in the management host (S350; S470); and
rebooting the management host to complete the implementation of the management software (S360; S480).

2. The method for implementing the management software according to claim 1, wherein the step of establishing the management system comprises:
configuring hardware equipments in the management host and the first peripheral hosts; and
installing operating systems and application programs in the management host and the first peripheral hosts.

3. The method for implementing the management software according to claim 1, wherein the step of installing the management software in the management host further comprises:
establishing a software configuration database in the management host for recording the first software configuration data.

4. The method for implementing the management software according to claim 3, wherein after obtaining the software licensing data, second software configuration data, and the network configuration data of the second peripheral hosts at the client end, the method further comprises:
recording the software licensing data, second software configuration data, and network configuration data in the software configuration database of the management host.

5. The method for implementing the management software according to claim 1, wherein after installing the management software in the management host, the method further comprises:
producing an image file of the management software (S430).

6. The method for implementing the management software according to claim 5, wherein after producing the image file of the management software, the method further comprises:
restoring the image file to a plurality of management hosts (S440); and
delivering the management hosts pre-installed with the pre-configured management software to a plurality of client ends for implementing the management software (S450).

7. The method for implementing the management software according to claim 5, further comprising:
selecting the management software according to a plurality of client requirements, establishing the management system, and installing the management software in the management host; and
producing the image file of the management software corresponding to each of the client's requirements respectively.

8. The method for implementing the management software according to claim 7, wherein the step of delivering the management host pre-installed with the pre-configured management software to the client end comprises:
selecting the image file of the management software according to the client's requirement requested by the client end (S440);
restoring the image file to the management host (S440); and
delivering the management host pre-installed with the pre-configured management software to the client end for implementing the management software (S450).

9. The method for implementing the management software according to claim 1, wherein the step of obtaining the software licensing data, second software configuration data, and network configuration data of the second peripheral hosts at the client end, and setting those data in the management host further comprises:
setting the second software configuration data for configuring the management software with the application programs of the second peripheral hosts.

10. The method for implementing the management software according to claim 9, wherein the second software configuration data comprises request handlers, active directories, Kerberos securities, database entries, and policy settings.

11. The method for implementing the management software according to claim 1, wherein the software licensing data comprises licensing agreements of the application programs installed in the second peripheral hosts at the client end.

12. The method for implementing the management software according to claim 1, wherein the network configuration data comprises host names, domain names, Internet Protocol (IP) Addresses, port numbers, user IDs and passwords of the second peripheral hosts at the client end.

13. The method for implementing the management software according to claim 1, wherein the first and the second peripheral hosts comprise an Exchange Server, a Structured Query Language (SQL) Server, an Active Directory Service Server, and a Backend Server.

14. The method for implementing management software according to claim 1, wherein the management software comprises Enterprise software.

15. A method for implementing hardware with pre-configured management software, comprising:
a software and hardware pre-configuring step (S310), comprising:
establishing a management system including the hardware and a plurality of first peripheral hosts, wherein the hardware is connected to each of the first peripheral hosts through a network (S511);
installing management software in the hardware (S512);
configuring the management software with a plurality of application programs installed in the first peripheral hosts and setting first software configuration data accordingly (S513); and
removing the connections between the hardware and the first peripheral hosts (S514); and
a software and hardware post-configuring step (S520), comprising:
connecting the hardware pre-installed with the pre-configured management software to each of a plurality of second peripheral hosts through a network (S521); and
obtaining software licensing data, second software configuration data, and network configuration data of the second peripheral hosts, and setting those data in the hardware (S522).

16. The method for implementing hardware with pre-configured management software according to claim 15, wherein after the user configuring step, the method further comprises:
rebooting the hardware (S530); and
enabling the settings of the software licensing data, the second software configuration data, and the network configuration data (S540).

17. The method for implementing hardware with pre-configured management software according to claim 15, wherein the step of establishing the management system comprises:
configuring hardware equipments in the hardware and the first peripheral hosts; and
installing operating systems and application programs in the hardware and the first peripheral hosts.

18. The method for implementing hardware with pre-configured management software according to claim 15, wherein after configuring the management software with the application programs installed in the first peripheral hosts, the method further comprises:
establishing a software configuration database in the hardware for recording the first software configuration data.

19. The method for implementing hardware with pre-configured management software according to claim 15, wherein after obtaining the software licensing data, second software configuration data, and network configuration data of the second peripheral hosts, the method further comprises:
recording the software licensing data, second software configuration data, and network configuration data in the software configuration database.

20. The method for implementing hardware with pre-configured management software according to claim 15, wherein the step of obtaining the software licensing data, second software configuration data, and network configuration data of the second peripheral hosts, and setting those data in the hardware further comprises:
setting second software configuration data for configuring the management software with the application programs of the second peripheral hosts.

21. The method for implementing hardware with pre-configured management software according to claim 15, wherein the second software configuration data comprises request handlers, active directories, Kerberos securities, database entries, and policy settings.

22. The method for implementing hardware with pre-configured management software according to claim 15, wherein the software licensing data comprises licensing agreements of the application programs installed in the peripheral hosts at the client end.

23. The method for implementing hardware with pre-configured management software according to claim 15, wherein the network configuration data comprises host names, domain names, Internet Protocol (IP) Addresses, port numbers, user IDs and passwords of the peripheral hosts at the client end.

24. The method for implementing hardware with pre-configured management software according to claim 15, wherein the peripheral hosts comprise an Exchange Server, a Structured Query Language (SQL) Server, an Active Directory Service Server, and a Backend Server.

25. The method for implementing hardware with pre-configured management software according to claim 15, wherein the management software comprises Enterprise software.

## Patentansprüche

1. Verfahren zum Implementieren von Management-Software bei Kunden, wobei die Management-Software zum Sammeln, Verwalten und Analysieren von Daten von einer Anzahl peripherer Hostcomputer verwendet wird, umfassend:
das Aufbauen eines Managementsystems auf einer Wartungsseite, wobei das Managementsystem einen Management-Hostcomputer und eine Anzahl erster peripherer Hostcomputer enthält, und der Management-Hostcomputer über ein Netz (S310; S410) mit jedem Hostcomputer der ersten peripheren Hostcomputer verbunden ist;
das Installieren der Management-Software im Management-Hostcomputer auf der Wartungsseite, umfassend das Einstellen erster Software-Konfigurationsdaten, die zum Konfigurieren der Management-Software mit einer Anzahl Anwendungsprogramme verwendet werden, die auf den ersten peripheren Hostcomputern (S320; S420) installiert sind;
das Liefern des Management-Hostcomputers, auf dem die vorkonfigurierte Management-Software vorinstalliert ist, an den Kunden (S330; S450);
das Verbinden des Management-Hostcomputers mit jedem Hostcomputer einer Anzahl zweiter peripherer Hostcomputer beim Kunden über ein Netz (S340; S460);
das Gewinnen von Software-Lizenzdaten, zweiten Software-Konfigurationsdaten und Netz-Konfigurationsdaten der zweiten peripheren Hostcomputer auf Seite des Kunden, und das Einstellen dieser Daten in dem Management-Hostcomputer (S350; S470); und
das erneute Hochfahren des Management-Hostcomputers zum Abschließen der Implementierung der Management-Software (S360; S480).

2. Verfahren zum Implementieren von Management-Software nach Anspruch 1, wobei der Schritt des Aufbauens des Managementsystems umfasst:
das Konfigurieren der Hardware-Anlagen im Management-Hostcomputer und in den ersten peripheren Hostcomputern; und
das Installieren von Betriebssystemen und Anwendungsprogrammen auf dem Management-Hostcomputer und den ersten peripheren Hostcomputern.

3. Verfahren zum Implementieren von Management-Software nach Anspruch 1, wobei der Schritt des Installierens der Management-Software auf dem Management-Hostcomputer zudem umfasst:
das Erstellen einer Softwarekonfigurations-Datenbank im Management-Hostcomputer zum Aufzeichnen der ersten Software-Konfigurationsdaten.

4. Verfahren zum Implementieren von Management-Software nach Anspruch 3, wobei das Verfahren nach dem Gewinnen der Software-Lizenzdaten, der zweiten Software-Konfigurationsdaten und der Netz-Konfigurationsdaten der zweiten peripheren Hostcomputer auf Seite des Kunden ferner umfasst:
das Aufzeichnen der Software-Lizenzdaten, der zweiten Software-Konfigurationsdaten und der Netz-Konfigurationsdaten in der Softwarekonfigurations-Datenbank des Management-Hostcomputers.

5. Verfahren zum Implementieren von Management-Software nach Anspruch 1, wobei das Verfahren nach dem Installieren der Management-Software auf dem Management-Hostcomputer weiterhin umfasst:
das Erzeugen einer Spiegeldatei der Management-Software (S430).

6. Verfahren zum Implementieren von Management-Software nach Anspruch 5, wobei das Verfahren nach dem Erzeugen der Spiegeldatei der Management-Software ferner umfasst:
das Wiederherstellen der Spiegeldatei auf mehreren Management-Hostcomputern (S440); und
das Liefern der Management-Hostcomputer, auf denen die vorkonfigurierte Management-Software vorinstalliert ist, an mehrere Kunden zum Implementieren der Management-Software (S450).

7. Verfahren zum Implementieren von Management-Software nach Anspruch 5, auch umfassend:
das Auswählen der Management-Software abhängig von einer Anzahl Anforderungen des Kunden, das Erstellen des Managementsystems und das Installieren der Management-Software auf dem Management-Hostcomputer; und
das Erzeugen der Spiegeldatei der Management-Software, die jeweils zu der entsprechenden Kundenanforderung gehört.

8. Verfahren zum Implementieren von Management-Software nach Anspruch 7, wobei der Schritt des Lieferns des Management-Hostcomputers, auf dem die vorkonfigurierte Management-Software vorinstalliert ist, an den Kunden umfasst:
das Auswählen der Spiegeldatei der Management-Software entsprechend den Kundenbedürfnissen, die kundenseitig gefordert werden (S440);
das Wiederherstellen der Spiegeldatei auf dem Management-Hostcomputer (S440); und
das Liefern des Management-Hostcomputers, auf dem die vorkonfigurierte Management-Software vorinstalliert ist, an den Kunden, damit die Management-Software installiert wird (S450).

9. Verfahren zum Implementieren von Management-Software nach Anspruch 1, wobei der Schritt des Gewinnens der Software-Lizenzdaten, der zweiten Software-Konfigurationsdaten und der Netz-Konfigurationsdaten der zweiten peripheren Hostcomputer auf Seite des Kunden und das Einstellen dieser Daten in dem Management-Hostcomputer ferner umfasst:
das Einstellen der zweiten Software-Konfigurationsdaten zum Konfigurieren der Management-Software mit den Anwendungsprogrammen der zweiten peripheren Hostcomputer.

10. Verfahren zum Implementieren von Management-Software nach Anspruch 9, wobei die zweiten Software-Konfigurationsdaten Anforderungs-Bearbeitungsprogramme, aktive Verzeichnisse, Kerberos-Sicherheitsprogramme, Datenbankeinträge und Strategieeinstellungen umfassen.

11. Verfahren zum Implementieren von Management-Software nach Anspruch 1, wobei die Software-Lizenzdaten Lizenzvereinbarungen der Anwendungsprogramme enthalten, die kundenseitig auf den zweiten peripheren Hostcomputern installiert sind.

12. Verfahren zum Implementieren von Management-Software nach Anspruch 1, wobei die Netz-Konfigurationsdaten Hostnamen, Domänennamen, Internet-Protokoll-Adressen (IP-Adressen), Portnummern, Benutzer-IDs und Passwörter der kundenseitigen zweiten peripheren Hostcomputer umfassen.

13. Verfahren zum Implementieren von Management-Software nach Anspruch 1, wobei zu den ersten und zweiten Hostcomputern gehören: ein Exchange Server, ein Structured Query Language (SQL) Server, ein Active Directory Service Server und ein Backend Server.

14. Verfahren zum Implementieren von Management-Software nach Anspruch 1, wobei die Management-Software Enterprise-Software enthält.

15. Verfahren zum Implementieren von Hardware mit vorkonfigurierter Management-Software, umfassend:
einen Software- und Hardware-Vorkonfigurierschritt (S510), umfassend:
das Erstellen eines Managementsystems, das die Hardware und eine Anzahl erster peripherer Hostcomputer enthält, wobei die Hardware mit jedem Computer der ersten peripheren Hostcomputer über ein Netz (S511) verbunden ist;
das Installieren von Management-Software in der Hardware (S512);
das Konfigurieren der Management-Software mit einer Anzahl Anwendungsprogramme, die in den ersten peripheren Hostcomputern installiert sind, und das demgemäße Einstellen der ersten Software-Konfigurationsdaten (S513); und
das Entfernen der Verbindungen zwischen der Hardware und den ersten peripheren Hostcomputern (S514); und
einen Software- und Hardware-Nachkonfigurierschritt (S520), umfassend:
das Verbinden der Hardware, in der die vorkonfigurierte Management-Software vorinstalliert ist, mit jedem Computer einer Anzahl zweiter peripherer Hostcomputer über ein Netz (S521); und
das Gewinnen der Software-Lizenzdaten, der zweiten Software-Konfigurationsdaten und der Netz-Konfigurationsdaten der zweiten peripheren Hostcomputer und das Einstellen dieser Daten in der Hardware (S522).

16. Verfahren zum Implementieren von Hardware mit vorkonfigurierter Management-Software nach Anspruch 15, wobei das Verfahren nach dem Benutzer-Konfigurationsschritt zudem umfasst:
das erneute Hochfahren der Hardware (S530); und
das Freigeben der Einstellungen der Software-Lizenzdaten, der zweiten Software-Konfigurationsdaten und der Netz-Konfigurationsdaten (S540).

17. Verfahren zum Implementieren von Hardware mit vorkonfigurierter Management-Software nach Anspruch 15, wobei der Schritt des Erstellens des Managementsystems umfasst:
das Konfigurieren der Hardwarevorrichtungen in der Hardware und den ersten peripheren Hostcomputern; und
das Installieren von Betriebssystemen und Anwendungsprogrammen in der Hardware und den ersten peripheren Hostcomputern.

18. Verfahren zum Implementieren von Hardware mit vorkonfigurierter Management-Software nach Anspruch 15, wobei das Verfahren nach dem Konfigurieren der Management-Software mit den Anwendungsprogrammen, die in den ersten peripheren Hostcomputern installiert sind, ferner umfasst:
das Erstellen einer Softwarekonfigurations-Datenbank in der Hardware zum Aufzeichnen der ersten Software-Konfigurationsdaten.

19. Verfahren zum Implementieren von Hardware mit vorkonfigurierter Management-Software nach Anspruch 15, wobei das Verfahren nach dem Gewinnen der Software-Lizenzdaten, der zweiten Software-Konfigurationsdaten und der Netz-Konfigurationsdaten der zweiten peripheren Hostcomputer weiterhin umfasst:
das Aufzeichnen der Software-Lizenzdaten, der zweiten Software-Konfigurationsdaten und der Netz-Konfigurationsdaten in der Softwarekonfigurations-Datenbank.

20. Verfahren zum Implementieren von Hardware mit vorkonfigurierter Management-Software nach Anspruch 15, wobei der Schritt des Gewinnens der Software-Lizenzdaten, der zweiten Software-Konfigurationsdaten und der Netz-Konfigurationsdaten der zweiten peripheren Hostcomputer und des Einstellens dieser Daten in der Hardware zudem umfasst:
das Einstellen der zweiten Software-Konfigurationsdaten zum Konfigurieren der Management-Software mit den Anwendungsprogrammen der zweiten peripheren Hostcomputer.

21. Verfahren zum Implementieren von Hardware mit vorkonfigurierter Management-Software nach Anspruch 15, wobei die zweiten Software-Konfigurationsdaten Anforderungs-Bearbeitungsprogramme, aktive Verzeichnisse, Kerberos-Sicherheitsprogramme, Datenbankeinträge und Strategieeinstellungen umfassen.

22. Verfahren zum Implementieren von Hardware mit vorkonfigurierter Management-Software nach Anspruch 15, wobei die Software-Lizenzdaten Lizenzvereinbarungen der Anwendungsprogramme enthalten, die kundenseitig auf den peripheren Hostcomputern installiert sind.

23. Verfahren zum Implementieren von Hardware mit vorkonfigurierter Management-Software nach Anspruch 15, wobei die Netz-Konfigurationsdaten Hostnamen, Domänennamen, Internet-Protokoll-Adressen (IP-Adressen), Portnummern, Benutzer-IDs und Passwörter der kundenseitigen peripheren Hostcomputer umfassen.

24. Verfahren zum Implementieren von Hardware mit vorkonfigurierter Management-Software nach Anspruch 15, wobei zu den Hostcomputern gehören: ein Exchange Server, ein Structured Query Language (SQL) Server, ein Active Directory Service Server und ein Backend Server.

25. Verfahren zum Implementieren von Hardware mit vorkonfigurierter Management-Software nach Anspruch 15, wobei die Management-Software Enterprise-Software enthält.

## Revendications

1. Procédé de mise en oeuvre d'un logiciel de gestion du côté client, dans lequel le logiciel de gestion est utilisé pour recueillir, gérer et analyser des données d'une pluralité d'ordinateurs hôtes périphériques, le procédé comprenant les étapes consistant à :
établir un système de gestion du côté service, dans lequel le système de gestion comprend un ordinateur hôte de gestion et une pluralité de premiers ordinateurs hôtes périphériques et l'ordinateur hôte de gestion est connecté à chacun des premiers ordinateurs hôtes périphériques par un réseau (S310 ; S410) ;
installer le logiciel de gestion sur l'ordinateur hôte de gestion du côté service, ce qui comprend le paramétrage de premières données de configuration logicielle utilisées pour la configuration du logiciel de gestion pour une pluralité de programmes applicatifs installés sur les premiers ordinateurs hôtes périphériques (D320 ; S420) ;
fournir du côté client l'ordinateur hôte de gestion avec le logiciel de gestion préconfiguré et préinstallé (S330 ; S450) ;
connecter l'ordinateur hôte de gestion à chaque ordinateur hôte parmi la pluralité de seconds ordinateurs hôtes du côté client, via un réseau (S340 ; S460) ;
obtenir des données de concession logicielle, des secondes données de configuration logicielle et des données de configuration de réseau des seconds ordinateurs hôtes périphériques du côté client et paramétrer ces données sur l'ordinateur hôte de gestion (S350 ; S470) ; et
redémarrer l'ordinateur hôte de gestion afin d'achever la mise en oeuvre du logiciel de gestion (S360 ; S480).

2. Procédé de mise en oeuvre du logiciel de gestion selon la revendication 1, dans lequel l'étape d'établissement du système de gestion comprend les étapes consistant à :
configurer des équipements matériels de l'ordinateur hôte de gestion et des premiers ordinateurs hôtes périphériques ; et
installer des systèmes d'exploitation et des programmes applicatifs sur l'ordinateur hôte de gestion et sur les premiers ordinateurs hôtes périphériques.

3. Procédé de mise en oeuvre du logiciel de gestion selon la revendication 1, dans lequel l'étape d'installation du logiciel de gestion sur l'ordinateur hôte de gestion comprend en outre l'étape consistant à :
établir une base de données de configuration logicielle sur l'ordinateur hôte de gestion afin d'enregistrer les premières données de configuration logicielle.

4. Procédé de mise en oeuvre du logiciel de gestion selon la revendication 3, dans lequel, après l'obtention des données de concession logicielle, des secondes données de configuration logicielle et des données de configuration de réseau des seconds ordinateurs hôtes périphériques du côté client, le procédé comprend en outre l'étape consistant à :
enregistrer les données de concession logicielle, les secondes données de configuration logicielle et les données de configuration de réseau dans la base de données de configuration logicielle de l'ordinateur hôte de gestion.

5. Procédé de mise en oeuvre du logiciel de gestion selon la revendication 1, dans lequel, après l'installation du logiciel de gestion sur l'ordinateur hôte de gestion, le procédé comprend en outre l'étape consistant à :
produire un fichier-image du logiciel de gestion (S430).

6. Procédé de mise en oeuvre du logiciel de gestion selon la revendication 5, dans lequel, après la production du fichier-image du logiciel de gestion, le procédé comprend en outre les étapes consistant à :
restaurer le fichier-image sur une pluralité d'ordinateurs hôtes de gestion (S440) ; et
fournir les ordinateurs hôtes de gestion avec le logiciel de gestion préconfiguré et préinstallé sur une pluralité de côtés client, pour la mise en oeuvre du logiciel de gestion (S450).

7. Procédé de mise en oeuvre du logiciel de gestion selon la revendication 5, comprenant en outre les étapes consistant à :
sélectionner le logiciel de gestion en fonction d'une pluralité d'exigences du client, établir le système de gestion et installer le logiciel de gestion sur l'ordinateur hôte de gestion ; et
produire le fichier-image du logiciel de gestion correspondant à chacune des exigences du client, respectivement.

8. Procédé de mise en oeuvre du logiciel de gestion selon la revendication 7, dans lequel l'étape de livraison de l'ordinateur hôte de gestion avec le logiciel de gestion préconfiguré et préinstallé du côté client comprend en outre les étapes consistant à :
sélectionner le fichier-image du logiciel de gestion en fonction des exigences du client demandées du côté client (S440) ;
restaurer le fichier-image sur l'ordinateur hôte de gestion (S440) ;
livrer du côté client l'ordinateur hôte de gestion avec le logiciel de gestion préconfiguré et préinstallé pour la mise en oeuvre du logiciel de gestion (S450).

9. Procédé de mise en oeuvre du logiciel de gestion selon la revendication 1, dans lequel l'étape d'obtention des données de concession logicielle, des secondes données de configuration logicielle et des données de configuration de réseau des seconds ordinateurs hôtes périphériques du côté client et de paramétrage de ces données sur l'ordinateur hôte de gestion comprend en outre l'étape consistant à :
paramétrer les secondes données de configuration logicielle afin de configurer le logiciel de gestion pour les programmes applicatifs des seconds ordinateurs hôtes périphériques.

10. Procédé de mise en oeuvre du logiciel de gestion selon la revendication 9, dans lequel les secondes données de configuration logicielle comprennent des gestionnaires de requêtes, des répertoires actifs, des sécurités du protocole Kerberos, des enregistrements de base de données et des paramètres de politique.

11. Procédé de mise en oeuvre du logiciel de gestion selon la revendication 1, dans lequel les données de concession logicielle comprennent des accords de licence pour les programmes applicatifs installés sur les seconds ordinateurs hôtes périphériques du côté client.

12. Procédé de mise en oeuvre du logiciel de gestion selon la revendication 1, dans lequel les données de configuration du réseau comprennent des noms d'ordinateurs hôtes, des noms de domaines, des adresses du protocole internet (IP), des numéros de port, des identificateurs d'utilisateur et des mots de passe pour les seconds ordinateurs hôtes périphériques du côté client.

13. Procédé de mise en oeuvre du logiciel de gestion selon la revendication 1, dans lequel les premiers et seconds ordinateurs hôtes périphériques comprennent un serveur Exchange, un serveur SQL (pour « *Structured Query Language* » - Langage d'interrogation structuré), un serveur ADS (pour *« Active Directory Service » -* service de répertoire actif) et un serveur d'arrière-plan.

14. Procédé de mise en oeuvre du logiciel de gestion selon la revendication 1, dans lequel le logiciel de gestion comprend un logiciel d'entreprise.

15. Procédé de mise en oeuvre de matériel avec un logiciel de gestion préconfiguré, comprenant :
une étape de préconfiguration logicielle et matérielle (S510) comprenant les étapes consistant à :
établir un système de gestion comprenant le matériel et une pluralité de premiers ordinateurs hôtes périphériques, dans lequel le matériel est connecté à chaque ordinateur hôte parmi les premiers ordinateurs hôtes périphériques via un réseau (S511) ;
installer le logiciel de gestion sur le matériel (S512) ;
configurer le logiciel de gestion avec une pluralité de programmes applicatifs installés sur les premiers ordinateurs hôtes périphériques et paramétrer des premières données de configuration logicielle en conséquence (S513) ; et
supprimer les connexions entre le matériel et les premiers ordinateurs hôtes périphériques (S514) ; et
une étape de postconfiguration logicielle et matérielle (S520) comprenant les étapes consistant à :
connecter le matériel avec le logiciel de gestion préconfiguré et préinstallé à chaque ordinateur hôte parmi une pluralité de seconds ordinateurs hôtes périphériques, via un réseau (S521) ; et
obtenir des données de concession logicielle, des secondes données de configuration logicielle et des données de configuration du réseau pour les seconds ordinateurs hôtes périphériques et paramétrer ces données sur le matériel (S522).

16. Procédé de mise en oeuvre de matériel avec un logiciel de gestion préconfiguré selon la revendication 15, dans lequel, après l'étape de configuration des utilisateurs, le procédé comprend en outre les étapes consistant à :
redémarrer le matériel (S530) ; et
valider les paramètres des données de concession logicielle, des secondes données de configuration logicielle et des données de configuration de réseau (S540).

17. Procédé de mise en oeuvre de matériel avec un logiciel de gestion préconfiguré selon la revendication 15, dans lequel l'étape d'établissement du système de gestion comprend les étapes consistant à :
configurer des équipements matériels sur le matériel et les premiers ordinateurs hôtes périphériques ; et
installer des systèmes d'exploitation et des programmes applicatifs sur le matériel et les premiers ordinateurs hôtes périphériques.

18. Procédé de mise en oeuvre de matériel avec un logiciel de gestion préconfiguré selon la revendication 15, dans lequel, après la configuration du logiciel de gestion pour les programmes applicatifs installés sur les premiers ordinateurs hôtes périphériques, le procédé comprend en outre l'étape consistant à :
établir une base de données de configuration logicielle sur le matériel pour enregistrer les premières données de configuration logicielle.

19. Procédé de mise en oeuvre de matériel avec un logiciel de gestion préconfiguré selon la revendication 15, dans lequel, après l'obtention des données de concession logicielle, des secondes données de configuration logicielle et des données de configuration du réseau pour les seconds ordinateurs hôtes périphériques, le procédé comprend en outre l'étape consistant à :
enregistrer les données de concession logicielle, les secondes données de configuration logicielle et les données de configuration du réseau dans la base de données de configuration logicielle.

20. Procédé de mise en oeuvre de matériel avec un logiciel de gestion préconfiguré selon la revendication 15, dans lequel l'étape d'obtention des données de concession logicielle, des secondes données de configuration logicielle et des données de configuration du réseau pour les seconds ordinateurs hôtes périphériques et de paramétrage de ces données sur le matériel comprend en outre l'étape consistant à :
paramétrer des secondes données de configuration logicielle afin de configurer le logiciel de gestion pour les programmes applicatifs des seconds ordinateurs hôtes périphériques.

21. Procédé de mise en oeuvre de matériel avec un logiciel de gestion préconfiguré selon la revendication 15, dans lequel les secondes données de configuration logicielle comprennent des gestionnaires de requêtes, des répertoires actifs, des sécurités du protocole Kerberos, des enregistrements de base de données et des paramètres de politique.

22. Procédé de mise en oeuvre de matériel avec un logiciel de gestion préconfiguré selon la revendication 15, dans lequel les données de concession logicielle comprennent des accords de licence pour les programmes applicatifs installés sur les seconds ordinateurs hôtes périphériques du côté client.

23. Procédé de mise en oeuvre de matériel avec un logiciel de gestion préconfiguré selon la revendication 15, dans lequel les données de configuration du réseau comprennent des noms d'ordinateurs hôtes, des noms de domaines, des adresses IP, des numéros de port, des identificateurs d'utilisateur et des mots de passe pour les ordinateurs hôtes périphériques du côté client.

24. Procédé de mise en oeuvre de matériel avec un logiciel de gestion préconfiguré selon la revendication 15, dans lequel les ordinateurs hôtes périphériques comprennent un serveur Exchange, un serveur SQL, un serveur ADS et un serveur d'arrière-plan.

25. Procédé de mise en oeuvre de matériel avec un logiciel de gestion préconfiguré selon la revendication 15, dans lequel le logiciel de gestion comprend un logiciel d'entreprise.
